# EUROPÄISCHE PATENTSCHRIFT

(11) **EP 1 019 270 B1**
(45) Veröffentlichungstag und Bekanntmachung des Hinweises auf die Patenterteilung: **28.11.2001**
(21) Anmeldenummer: 98954129.7
(22) Anmeldetag: 07.09.1998
(51) Int. Cl.: B60R 21/32

(54) **VERFAHREN ZUM STEUERN DES AUFBLASENS EINES GASSACKS SOWIE GASSACK-UNFALLSCHUTZVORRICHTUNG**
METHOD FOR CONTROLLING A GAS BAG AND A GAS BAG ACCIDENT PROTECTION DEVICE
PROCEDE POUR COMMANDER LE GONFLAGE D'UN SAC A GAZ, ET DISPOSITIF A SAC A GAZ DE PROTECTION EN CAS D'ACCIDENT

(30) Priorität: 30.09.1997 DE 19743304
(43) Veröffentlichungstag der Anmeldung: 19.07.2000
(73) Patentinhaber: SIEMENS AKTIENGESELLSCHAFT, 80333 München (DE)
(72) Erfinder: BLANK, Thomas, D-76185 Karlsruhe (DE); ZELGER, Christian, D-93049 Regensburg (DE); HEITZER, Günter, D-93102 Pfatter (DE)
(86) Internationale Anmeldenummer: DE9802630
(87) Internationale Veröffentlichungsnummer: WO9916644

(56) Entgegenhaltungen:
- EP-A- 0 790 157
- US-A- 5 411 289
- US-A- 5 460 405
- US-A- 5 613 702
- US-A- 5 697 639

## Beschreibung

Die Erfindung betrifft ein Verfahren zum Steuern des Aufblasens eines Gassacks in einer Unfallschutzvorrichtung eines Kraftfahrzeugs gemäß dem Oberbegriff des Anspruchs 1. Die Erfindung betrifft weiter eine Gassack-Unfallschutzvorrichtung gemäß dem Oberbegriff des Anspruchs 2.

Gassack-Schutzvorrichtungen oder sogenannte Airbags finden in Kraftfahrzeugen zunehmend Verbreitung. Der zum Füllen des Airbags notwendige Gasmassestrom wird derzeit üblicherweise durch Abbrennen eines festen Brennstoffs, z.B. Natriumacid erzeugt, wobei der Brennstoff von einer Zündpille gezündet wird. Alternativ sind Gasgeneratoren im Einsatz, die innerhalb einer Gaskammer eine feste.Treibladung enthalten, wobei in der Gaskammer Gas unter hohem Druck gespeichert ist (Hybridgeneratoren). Bei Zündung der Treibladung, die ebenfalls elektrisch mittels einer Zündpille erfolgt, entsteht an der Gaskammer an einer vorbestimmten Stelle ein Loch, durch das hindurch der Gassack bzw. Airbag aufgeblasen wird.

Das Druckniveau des Gassacks ist die für die Rückhaltewirkung maßgebliche'Größe. Ist das Druckniveau zu gering, besteht die Gefahr, daß ein Fahrzeuginsasse trotz des Gassacks beispielsweise auf ein Lenkrad aufprallt und sich Verletzungen zuzieht. Ist'das Druckniveau jedoch zu hoch, so kann dies zu Verletzungen von kleinen Personen, Kindern oder Säuglingen führen. Das Druckniveau, das der Gassack erreicht, ist somit eine kritische Größe.

Zusätzlich hat sich herausgestellt, daß bei geringen Temperaturen, Unfällen mit starker Verzögerung und großen schweren und nicht angegurteten Fahrzeuginsassen die Gefahr besteht, daß der Gassackdruck nicht ausreicht, um das Durchschlagen des Insassen auf Armaturenteile zu verhindern. Bei sehr hohen Temperaturen und kleinen, leichten und nicht angegurteten Fahrzeuginsassen besteht dagegen die Gefahr, daß der Insasse vom Airbag bei dessen Entfaltung verletzt wird.

Aus der EP 0 790 157 ist eine Gassack-Unfallschutzvorrichtung für ein Kraftfahrzeug enthaltend einen Gassack, eine Aufblaseinrichtung für den Gassack mit einem Gasgenerator, eine Zündeinrichtung zum Aktivieren des Gasgenerators sowie ein Steuergerät zum Erzeugen eines Zündsignals für die Zündeinrichtung bekannt. Es ist ferner eine Temperaturmeßeinrichtung mit einem Meßfühler zum Erfassen einer Temperatur des Gasgenerators vorgesehen.

Der Erfindung liegt die Aufgabe zugrunde, ein Verfahren zum Steuern des Aufblasens eines Gassacks sowie eine Gassack-Unfallschutzvorrichtung zu schaffen, mit dem bzw. der die Verletzungsgefahr weiter vermindert wird.

Eine erste Lösung des das Verfahren betreffende Teils der Erfindungsaufgabe wird mit den Merkmalen des Hauptanspruchs gelöst.

Mit den erfindungsgemäßen Verfahren und Vorrichtung wird eine Temperatur des Gasgenerators, die entscheidenden Einfluß auf die Gasentwicklung beim Abbrennen des Brennstoffs hat, gemessen und beim Aufblasen des Gassacks berücksichtigt. Die Temperatur kann, wenn der Gasgenerator geeignet angeordnet ist, die Umgebungstemperatur sein; wenn der Gasgenerator an einer Stelle des Fahrzeugs angeordnet ist, deren Temperatur von der der Umgebung erfahrungsgemäß deutlich unterschiedlich ist, muß die Temperatur des Gasgenerators unmittelbar, möglichst die des Brennstoffs, gemessen werden.

Für die Steuerung des Aufblasens in Abhängigkeit von der Temperatur gibt es zahlreiche Möglichkeiten. Beispielsweise kann die Zündung bei niedriger Temperatur mit geringerer Verzögerung nach einem Unfall ausgelöst werden. Weiter werden die unterschiedlichsten Arten von Gassäcken an unterschiedlichsten Stellen des Kraftfahrzeugs verwendet. Wenn solche Gassäcke insgeamt porös ausgebildet sind oder mit Abströmöffnungen versehen sind, hängt der in ihnen entstehende Druck vom Massestrom des einströmenden Gases ab. Wenn dieser Massestrom bei hoher Temperatur zunimmt, kann dennoch ein temperaturunabhängiger Druck erzielt werden, indem beispielsweise eine Einströmöffnung in dem Gassack mit zunehmender Temperatur verkleinert wird und umgekehrt.

Der Gassack kann der Reihe nach von mehreren Gasgeneratoren aufgeblasen werden, so daß sich ein vorbestimmter Druckverlauf erzielen läßt, der durch temperatur- und/oder druckabhänige Wahl der Zündungen der einzelnen Gasgeneratoren einem Sollverlauf entspricht.

Zum Erreichen eines vorbestimmten Drucks im Gassack ist es vorteilhaft, einen nachfolgenden Gasgenerator wegen der mit abnehmender Temperatur langsamer erfolgender Gaserzeugung mit abnehmender Temperatur zunehmend früher zu aktivieren, so daß der Temperaturabhängigkeit des Gasstroms tendenziell entgegengewirkt wird.

Ein Reaktionsbeschleuniger kann sowohl bei temperaturabhängiger als auch bei druckabhängiger Regelung des Betriebs des Gasgenerators eingesetzt werden.

Die Eingriffsmöglichkeiten in die Gassack-Unfallschutzvorrichtung, mit denen einer Temperaturabhängigkeit des sich einstellenden Gassackdrucks aufgrund der Temperaturabhängigkeit des Abbrennens des Gas erzeugenden Brennstoffs und/oder des Gasdrucks in einem geschlossenen Behälter entgegengewirkt werden kann, sind vielfältig. Beispielsweise können Ausströmöffnungen aus dem Gasgenerator mit abnehmender Temperatur vergrößert werden oder Ausströmöffnungen aus dem Gassack mit abnehmender Temperatur verkleinert werden und/oder die Zündzeitpunkte der einzelnen Gasgeneratoren können verändert werden, wenn für einen Gassack mehrere Gasgeneratoren verwendet werden.

Die Erfindung wird im folgenden anhand schematischer Zeichnungen beispielsweise und mit weiteren Einzelheiten erläutert.
Es stellen dar:
- Fig. 1: ein Diagramm zu Verdeutlichung der Temperaturabhängigkeit des Gasmassestroms,
- Fig. 2 und 3: Blockschaltbilder;
- Fig. 4: eine Ausführungsform der erfindungsgemäßen Vorrichtung,
- Fig. 5: eine weitere Ausführungsform einer erfindungsgemäßen Vorrichtung,
- Fig. 6: einen Verlauf des Gasdrucks zur Erläuterung der Wirkungsweise der Ausführungsform gemäß Fig. 5, und
- Fig. 7: schematische Details einer weiteren Ausführungsform einer Gassack-Unfallschutzvorrichtung.

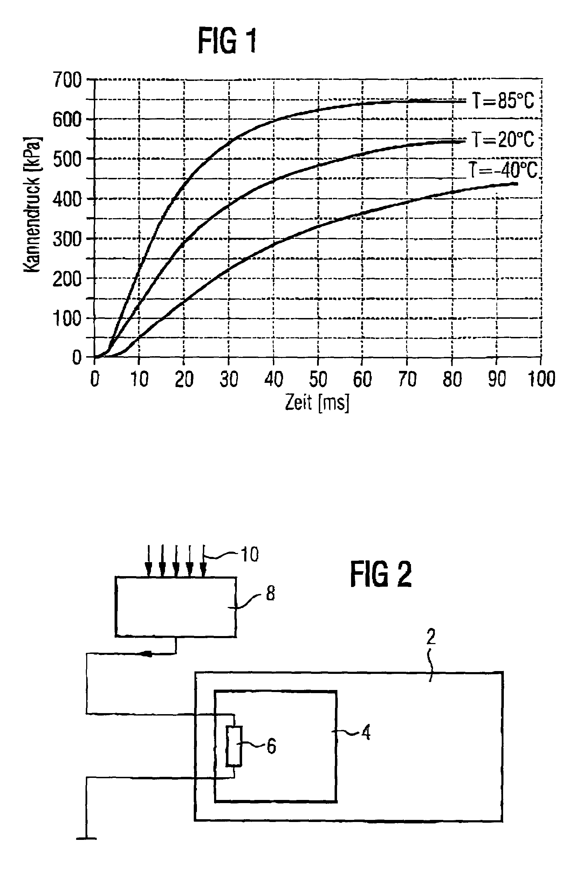

Fig. 1 stellt den Druckaufbau innerhalb eines Gasgenerators, beispielsweise einer Kammer, innerhalb der fester Brennstoff abbrennt und von der das entstehende Gas in einen Gassack entweicht, in Abhängigkeit von der Temperatur dar. Dieser Druck ist bei entsprechend großer Überströmöffnung zwischen Gasgenerator und Gassack im wesentlichen gleich dem im Gassack herrschenden Druck, wobei sich versteht, daß dieser Druck wegen der Gasausströmung aus dem Gassack sich nur hält, wenn entsprechend viel Gas erzeugt wird.

Zum Zeitpunkt Null wird jeweils eine Zündpille im Gasgenerator gezündet. Wie ersichtlich, baut sich bei einer Anfangstemperatur von 85°C des Festbrennstoffs bzw. der Zündpille innerhalb von 80 ms Druck von etwa 650 kPa auf. Bei einer Temperatur von 20°C baut sich innerhalb von 80 ms mit langsameren Anstieg ein Druck von etwa 500 kPa auf. Bei -40°C ergibt sich nach 80 ms lediglich ein Druck von gut 400 kPa, der allerdings langsam weiter zunimmt. Diese starke Temperaturabhängigkeit des sich aufbauenden Gasdrucks ist, wie eingangs erläutert, nachteilig und führt zu einer begrenzten Wirksamkeit des Gassacks im Falle eines Unfalls. Bei mehrstufigen Airbagmodulen, deren Airbag bzw. Gassack von mehreren Gasgeneratoren aufgeblasen wird, werden die den einzelnen Gasgeneratoren zugeordneten Treibladungen zeitlich versetzt gezündet, wodurch sich der Gasmassestrom und damit der Druck im Gassack einstellbar gestalten läßt. Durch Messung der Temperatur kann entsprechend der Temperaturabhängigkeit des Druckniveaüs entgegengewirkt werden.

Fig. 2 zeigt eine erste Ausführungsform einer Vorrichtung zur Messung der Temperatur einer Zündpille und damit einer Treibladung innerhalb des Gasgenerators eines Airbag-Moduls.

Gemäß Fig. 2 ist innerhalb einer Treibladung 2 eine Zündpille 4 angeordnet. Die Zündpille 4, deren elektrisches Ersatzschaltbild als.Widerstand 6 dargestellt ist, ist mit Masse und einem Ausgang eines Steuergerätes 8 verbunden.

Die Funktion der beschriebenen Anordnung ist an sich bekannt und wird daher nicht im einzelnen erläutert.

Eingängen 10 des Steuergeräts werden von Sensoren, unter denen insbesondere ein Beschleunigungssensor ist, Signale zugeführt, aufgrund derer ein im Steuergerät 8 enthaltener Mikroprozessor errechnet, ob an die Zündpille 4 ein Zündimpuls vorbestimmten Energieinhaltes gesendet wird, aufgrund dessen die Zündpille 4 die Treibladung 2 zündet und der an einen Behälter mit der Treibladung angeschlossene, nicht dargestellte Gassack aufgeblasen wird.

Es wird routinemäßig der Wert des Widerstandes der Zündpille 4 gemessen, der naturgemäß temperaturabhängig ist. Dazu wird, von dem Mikroprozessor des Steuergeräts 8 gesteuert, eine vorbestimmte konstante Spannung U_{Mess} an die Zündpille 4 gelegt und der Stromfluß I_{Mess} gemessen. Der Widerstand der Zündpille, kann auf diese Weise routinemäßig bestimmt werden, so daß die Temperatur der Zündpille 4 und damit der Treibladung 2 ermittelt werden kann.

Ein Vorteil der beschriebenen Vorrichtung ist, daß die geschilderte Hardware in üblichen Airbag-Einrichtungen vorhanden sind, wobei über die Leitung zwischen Steuergerät 8 und Zündpille 4 routinemäßig eine Diagnose der Zündpille 4 im Hinblick auf Funktionsfähigkeit, Nichtfunktionsfähigkeit oder Zündpille abgebrannt bzw. gezündet erfolgt. Durch in das Steuergerät 4 implementierte Software ist der Diagnosebetrieb um die Ermittlung der Temperatur der Zündpille 4 bzw. der Treibladung 2 erweitert.

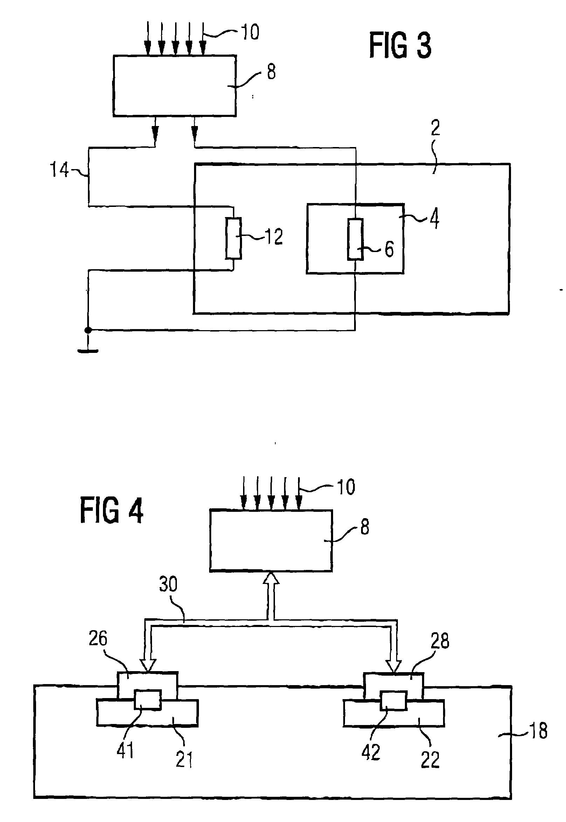

Fig. 3 zeigt eine weitere Ausführungsform einer Vorrichtung zur Ermittlung der Temperatur der Treibladung. Für funktionsgleiche oder funktionsähnliche Bauteile sind die gleichen Bezugszeichen wie in Fig. 2 verwendet. Die Ausführungsform der Fig. 3 unterscheidet sich von der der Fig. 2 dadurch, daß in die Treibladung 2 ein gesonderter Temperatursensor 12 integriert ist, der mit einem weiteren Ausgang des Steuergerätes 8 über eine Temperaturmeßleitung 14 verbunden ist. Der Temperatursensor 12 kann beispielsweise ein Thermoelement, d.h. ein Widerstand mit starker Temperaturabhängigkeit, sein.

Das Meßprinzip ist ähnlich dem der Fig. 3. Bei konstanter, ar dem Temperatursensor 12 liegender Spannung U_{Mess} hängt der durch den Temperatursensor 12 fließende Strom I_{Mess} von dessen Temperatur ab, so daß die Temperatur im Steuergerät 8 errechnet werden kann. Die Temperaturmessung mit der Vorrichtung gemäß Fig. 3 ist genauer als die der Fig. 2.

Fig. 4 zeigt eine weitere Ausführungsform eines Steuergerätes 8 mit angeschlossenen Zündpillen und Treibladungen:

In einem Gassack 18 sind zwei Treibladungen 21 und 22 angeordnet, denen jeweils eine Zündpille 41 und 42 zugeordnet ist. Jede Zündpille 41 bzw. 42 enthält einen integrierten Schaltkreis (ASIC) 26 bzw. 28, der mit dem Steuergerät 8 über eine Datenleitung 30 verbunden ist. Über die als Kommunikations-Bus ausgeführte Datenleitung 30 wird im Auslösefall von dem Steuergerät 8 an die Schaltkreise 26 bzw. 28 die codierte Information gesendet: Zünde Zündpille 41 und/ oder 42. Daraufhin wird ein Schmelzwiderstand, der meist als integrierte Widerstandsbahn in dem integrierten Schaltkreis 26 bzw 28 ausgebildet ist, mit ausreichender Energie aus einer nicht dargestellten Energieversorgung der Zündpille, z.B. einem Kondensator, beaufschlagt.

Von den Schaltkreisen 26 und 28 werden an die Steuereinheit 8 die Informationen gesendet: Zündpille o.k. oder nicht o.k., Zündpille hat gezündet (ist abgebrannt) und Widerstand der Zündpille - eben der Widerstandwert des als Zündwiderstand auf dem integrierten Schaltkreis 26 bzw 28 integrierten Widerstands. Dabei kann aus dem Widerstand der Zündpille in der Steuereinheit 8 die Temperatur der Zündpille errechnet werden. Anhand der Temperaturinformation kann die zeitliche Aufeinanderfolge der Zündung der Zündpillen 41 und 42 derart gesteuert werden, daß im Gassack 18 ein vorbestimmter, von der Ausgangstemperatur weitgehend unabhängiger Druckverlauf erzielt wird.

Alternativ oder zusätzlich zur vorbeschriebenen Widerstandsmessung im integrierten Schaltkreis 26 und 28 kann jeder Schaltkreis 26 und 28 einen anders ausgebildeten Sensor zur Ermittlung der Temperatur der Zündpille aufweisen, die gleichzeitig im wesentlichen die Temperatur der zugehörigen Treibladung bzw. Temperatur des Gassacks 18 ist. Es kann auch eine andere Widerstandsbahn des integrierten Schaltkreises 26 bzw 28 als die Zündwiderstandsbahn zur Temperaturermittlung verwendet werden. Vorzugsweise wird eine Diode im integrierten Schaltkreis 26 bzw 28 zur Temperaturmessung verwendet, wobei der Diodenstrom als temperaturabhängige Größe gemessen wird. Die ermittelte Temperatur wird als codiertes Signal zur Steuereinheit 8 übermittelt.

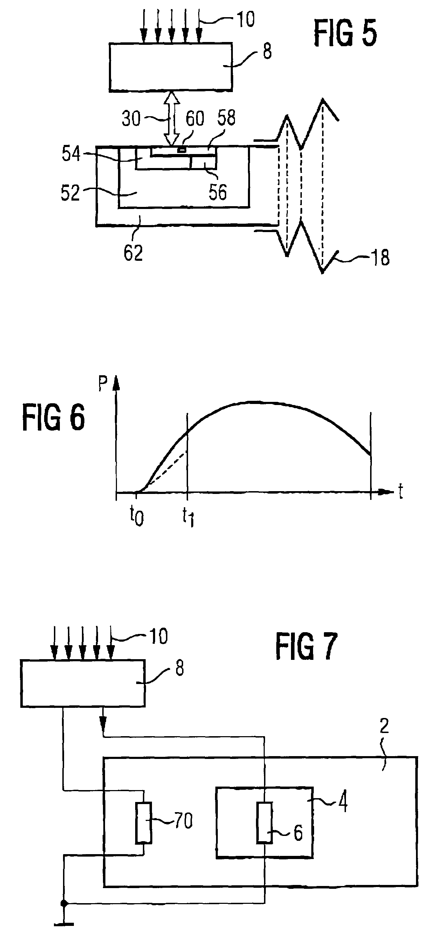

Fig. 5 zeigt eine Ausführungsform, bei der eine Treibladung 52 von einer Zündpille 54 gezündet wird und zusätzlich ist ein Reaktionsbeschleuniger 56 vorgesehen, der beispielsweise mit einer eigenen, nicht dargestellten Zündpille, freisetzbar ist und im Bedarfsfall die Abbrandgeschwindigkeit der Treibladung 52 unterstützt. Ein integrierter Schaltkreis 58, zur Auslösung der Zündpille 54 und des Reaktionsbeschleunigers 56 ist über die Datenleitung 30 mit dem Steuergerät 8 verbunden. Der integrierte Schaltkreis 58 weist einen Drucksensor 60 auf, der den Gasdruck innerhalb eines Gehäuses 62 mißt, an das der Gassack 18 angeschlossen ist. Der Drucksensor 60 kann dabei im Ausströmkanal oder abseits des Ausströmkanals des Gassacks angeordnet sein.

Die Funktion der Ausführungsform gemäß Fig. 5 wird anhand Fig. 6 erläutert. Die durchgezogene Kurve stelle einen Solldruckverlauf dar, wenn die Zündpille 54 zum Zeitpunkt t₀ gezündet wird. Wird nun im tatsächlichen Auslösefall ein Ist-druckverlauf gemäß der gestrichelten Kurve erreicht, so wird bei t₁ der Reaktionsbeschleuniger 56 aktiviert, so daß der Druck zunimmt und den Solldruckverlauf erreicht.

Es versteht sich, daß die Ausführungsform gemäß Fig. 5 ebenfalls mehrstufig, wie die der Fig. 4 ausgebildet sein kann.

Fig. 7 zeigt eine Ausführungsform, die weitgehend der der Fig. 3 entspricht, mit dem Unterschied, daß der Temperatursensor 12 der Fig. 3 durch durch eim Temperierelement 70 ersetzt ist, mit dem die Temperatur der Treibladung 2, gesteuert vom Steuergerät 8, auf einem vorbestimmten Wert gehalten werden kann. Dabei kann das Temperierelement 70 durch einen Heizwiderstand gebildet sein oder als ein Peltierelement ausgebildet sein, mit dem geheizt oder gekühlt werden kann. Es versteht sich, daß das Temperierelement 70, über das gleichzeitig die Temperaturmessung erfolgt, an einer Stelle sitzt, deren Temperatur maßgeblich für die Gasentwicklung ist.

## Patentansprüche

1. Verfahren zum Steuern des Aufblasens eines Gassacks (18) in einer Unfallschutzvorrichtung eines Kraftfahrzeugs,
bei welchem Verfahren ein Gasgenerator (4; 41; 42) auf ein Zündsignal hin aktiviert wird und den Gassack (18) in Abhängigkeit von Betriebsbedingungen aufbläst,
bei dem eine Temperatur des Gasgenerators (4; 41; 42) zumindest mittelbar gemessen wird und das Aufblasen in Abhängigkeit von der Temperatur erfolgt,
**dadurch gekennzeichnet,**
**daß** die Temperatur durch einen integrierten Schaltkreis (26,28) erfaßt wird,
**daß** die ermittelte Temperatur als codiertes Signal zu einer Steuereinheit (8) übermittelt wird, und
**daß** das Zündsignal von der Steuereinheit (8) geliefert wird.

2. Gassack-Unfallschutzvorrichtung für ein Kraftfahrzeug, enthaltend einen Gassack (18), eine Aufblaseinrichtung für den Gassack mit einem Gasgenerator (2), eine Zündeinrichtung (4; 54) zum Aktivieren des Gasgenerators, ein Steuergerät (8) zum Steuern des Betriebs der Aufblaseinrichtung abhängig von der Temperatur, und zum Erzeugen eines Zündsignals für die Zündeinrichtung, eine Temperaturmeßeinrichtung mit einem Meßfühler (6) zum zumindest mittelbaren Erfassen einer Temperatur des Gasgenerators,
**dadurch gekennzeichnet,**
**daß** die Aufblaseinrichtung einen eine Temperatur des Gasgenerators (21, 22) erfassenden integrierten Schaltkreis (26, 28) enthält, der mit dem Steuergerät (8) über eine Datenleitung (30) verbunden ist.

3. Vorrichtung nach Anspruch 2, **dadurch gekennzeichnet, daß** der integrierte Schaltkreis (26, 28) an der Zündeinrichtung (41, 42) angeordnet ist.

4. Vorrichtung nach einem der Ansprüche 2 oder 3, **gekennzeichnet durch** eine Vorrichtung zum Einleiten eines Reaktionsbeschleunigers (56) in den Gasgenerator bei niedriger Temperatur und/oder unter einem Sollwert liegenden Druck.

5. Vorrichtung nach Anspruch 2, **dadurch gekennzeichnet, daß** eine Zündwiderstandsbahn des integrierten Schaltkreises (26, 28) als Meßfühler (6) vorgesehen ist.

6. Vorrichtung nach Anspruch 2, **dadurch gekennzeichnet, daß** eine andere Widerstandsbahn des integrierten Schaltkreises (26, 28) als die Zündwiderstandsbahn als Meßfühler (6) vorgesehen ist.

7. Vorrichtung nach Anspruch 2, **dadurch gekennzeichnet, daß** eine Diode im integrierten Schaltkreis (26, 28) als Meßfühler (6) vorgesehen ist.

## Claims

1. Method for controlling the inflation of a gasbag (18) in an accident prevention device of a vehicle, using a method whereby a gas generator (4, 41, 42) is activated by a firing signal and the gasbag (18) is inflated relative to operating conditions,
whereby a temperature of the gas generator (4, 41, 42) is measured at least indirectly and the inflation takes place relative to temperature,
**characterised in that**
the temperature is measured by an integrated circuit (26, 28),
the measured temperature is applied as a coded signal to a control unit (8) and
the firing signal is supplied from the control unit (8).

2. Gasbag accident protection device for a vehicle, containing a gasbag (18), an inflation device for the gasbag with a gas generator (2) , a firing device (4, 54) for activating the gas generator, a control unit (8) for controlling the operation of the inflation device relative to temperature and, for generating a firing signal for the firing device, a temperature measuring device with a measuring sensor (6) for at least indirect measurement of the temperature of the gas generator,
**characterised in that**
the inflation device contains an integrated circuit (26, 28) for measuring a temperature of the gas generator (21, 22), which is connected via a data line (30) to the control unit (8).

3. Device in accordance with Claim 2, **characterised in that** the integrated circuit (26, 28) is arranged at the firing device (41, 42).

4. Device in accordance with Claim 2 or 3, **characterised by** a device for activating a reaction accelerator (56) in the gas generator at low temperature and/or at a pressure below a set value.

5. Device in accordance with Claim 2, **characterised in that** a firing resistance track of the integrated circuit (26, 28) is provided as a measuring sensor (6).

6. Device in accordance with Claim 2, **characterised in that** a resistance track of the integrated circuit (26, 28) which is different from the firing resistance track is provided as a measuring sensor (6).

7. Device in accordance with Claim 2, **characterised in that** a diode is provided in the integrated circuit (26, 28) as a measuring sensor (6).

## Revendications

1. Procédé de commande du gonflage d'un coussin gonflable (18) dans un dispositif de protection contre les accidents d'un véhicule automobile, procédé au cours duquel
un générateur de gaz (4; 41; 42) est activé sur réception d'un signal d'allumage et gonfle le coussin gonflable (18) en fonction de conditions de fonctionnement,
une température du générateur de gaz (4; 41; 42) est mesurée au moins indirectement, et le gonflage se fait en fonction de la température, **caractérisé en ce que**
- la température est mesurée par un circuit intégré (26, 28),
- la température relevée est transmise, comme signal codé, à une unité de commande (8), et
- le signal d'allumage est fourni par l'unité de commande (8).

2. Dispositif de protection contre les accidents pour un véhicule automobile, par coussin gonflable, contenant un coussin gonflable (18), un dispositif de gonflage pour le coussin gonflable comportant un générateur de gaz (2), un dispositif d'allumage (4; 54) pour activer le générateur de gaz, un appareil de commande (8) pour commander le fonctionnement du dispositif de gonflage en fonction de la température, et pour produire un signal d'allumage pour le dispositif d'allumage, un dispositif de mesure de la température comportant un capteur de mesure (6) pour au moins la mesure directe d'une température du générateur de gaz,
**caractérisé en ce que** le dispositif de gonflage comprend un circuit intégré (26, 28) mesurant une température du générateur de gaz (21, 22), ce circuit intégré étant relié à l'appareil de commande (8) par un conducteur de transmission de données (30).

3. Dispositif suivant la revendication 2,
**caractérisé en ce que** le circuit intégré (26, 28) est disposé contre le dispositif d'allumage (41, 42).

4. Dispositif suivant l'une des revendications 2 ou 3, **caractérisé par** un dispositif pour introduire un accélérateur de réaction (56) dans le générateur de gaz en cas de température basse et/ou dans le cas d'une pression se trouvant en-dessous d'une valeur de consigne.

5. Dispositif suivant la revendication 2,
**caractérisé en ce qu'**une bande de résistance d'allumage du circuit intégré (26, 28) est prévue comme détecteur de mesure (6).

6. Dispositif suivant la revendication 2,
**caractérisé en ce qu'**une autre bande de résistance du circuit intégré (26, 28) est prévue, comme bande de résistance d'allumage, comme détecteur de mesure (6).

7. Dispositif suivant la revendication 2,
**caractérisé en ce qu'**une diode est prévue dans le circuit intégré (26. 28), comme détecteur de mesure (6).
